# EUROPÄISCHE PATENTANMELDUNG

(11) **EP 2 772 742 A1**
(43) Veröffentlichungstag der Anmeldung: **03.09.2014**
(21) Anmeldenummer: 13156884.2
(22) Anmeldetag: 27.02.2013
(51) Int. Cl.: G01L 25/00, G01M 15/04, G01M 15/14, G01L 3/14, G01L 3/24, F01D 9/04

(54) **Leistungsbestimmungsverfahren und Turbomaschine**

(71) Anmelder: Siemens Aktiengesellschaft, 80333 München (DE)
(72) Erfinder: Thiemann, Thomas, 45659 Recklinghausen (DE)

(57) **Zusammenfassung**

Die vorliegende Erfindung betrifft ein Verfahren (20) zur Bestimmung einer Leistung (25) einer Turbomaschine (2), die in ihrem Innenraum (18) ein gegen ein Drehmoment (23) abgestütztes Turbinengehäuse (3) aufweist. Bei dem erfindungsgemäßen Verfahren werden zunächst aktuelle Auflagekräfte (8) des Turbinengehäuses (3) ermittelt (21) und anschließend Differenzen zu hinterlegten permanenten Auflagekräften (26) gebildet. Als Summe dieser Differenzen wird dann das Drehmoment (23) ermittelt (22) und daraus wird die Leistung (25) der Turbomaschine (2) ermittelt (24).

## Beschreibung

Die vorliegende Erfindung betrifft ein Verfahren zur Bestimmung einer Leistung einer Turbomaschine sowie eine Turbomaschine.

Eine Leistung von insbesondere Niederdruckturbinen in Turbosätzen kann nach dem Stand der Technik nicht direkt gemessen werden, insbesondere wenn sie in einem Wellenstrang mit weiteren Turbinen angeordnet sind. Die Leistungsermittlung muss dann über eine Leistungsbilanz der anderen Komponenten des Turbosatzes erfolgen. Dadurch unterliegt die bekannte Leistungsbestimmung einer gewissen Ungenauigkeit.

Der vorliegenden Erfindung liegt die Aufgabe zugrunde, ein verbessertes Verfahren zur Leistungsbestimmung einer Turbomaschine sowie eine Turbomaschine bereitzustellen.

Gelöst wird diese Aufgabe mit einem Leistungsbestimmungsverfahren nach Anspruch 1 sowie einer Turbomaschine nach Anspruch 5. Vorteilhafte Weiterbildungen der Erfindung sind in den Unteransprüchen angegeben und in der Beschreibung beschrieben.

Bei dem erfindungsgemäßen Verfahren zur Bestimmung einer Leistung einer Turbomaschine, die in ihrem Innenraum ein gegen ein Drehmoment abgestütztes Turbinengehäuse umfasst, werden zunächst aktuelle Auflagekräfte des Turbinengehäuses ermittelt und anschließend Differenzen zu hinterlegten permanenten Auflagekräften gebildet. Als Summe dieser Differenzen wird dann das Drehmoment ermittelt und daraus wird die Leistung der Turbomaschine ermittelt.

Damit ist ein Verfahren bereitgestellt, welches leicht angewendet werden kann und einen relativ genauen Wert für die Leistung der Turbomaschine liefert.

In einer vorteilhaften Ausführung des erfindungsgemäßen Verfahrens wird eine elastische Verformung von Tragelementen des Turbinengehäuses ermittelt. Aus dieser Verformung der Tragelemente werden dann jeweils die aktuellen Auflagekräfte bestimmt.

Damit kann sich insbesondere das Bauprinzip von Niederdruckturbinen mit Gehäusetragarmen zu Nutze gemacht werden. Erfindungsgemäß werden dazu insbesondere Dehnmessstreifen verwendet.

In einer weiteren vorteilhaften Ausführung des erfindungsgemäßen Verfahrens wird ein Verhältnis zwischen der Verformung der Tragelemente und der aktuellen Auflagekräfte durch Aufbringung einer vordefinierten Kraft ermittelt.

Die elastische Verformung der Tragelemente verhält sich linear zur aufgebrachten Zusatzkraft. Damit ist es möglich, eine Kalibrierung der Sensoren vorzunehmen und das Messergebnis zu verbessern.

In einer weiteren vorteilhaften Ausführung des erfindungsgemäßen Verfahrens wird die vordefinierte Kraft durch ein Aufbringen eines bekannten Unterdrucks im Innenraum der Turbomaschine in Kombination mit einer Abdichtung des Innenraums zur Umgebung erzeugt. Dadurch wirkt der Umgebungsdruck auf einer Fläche mit bekannter Größe als zusätzliche Kraft auf das Turbinengehäuse. Die Fläche auf der der Umgebungsdruck wirkt entspricht dem Querschnitt des Einströmrohrs des Turbinengehäuses.

Damit können Vorrichtungen, wie eine Evakuierungseinrichtung zum Aufbringen der zusätzlichen Kraft verwendet werden, die an vielen Turbomaschinen, insbesondere Dampfturbinen, schon für andere Zwecke vorhanden sind. Eine Anwendung der Kalibrierung ist damit sehr vereinfacht.

Die erfindungsgemäße Turbomaschine weist einen Innenraum und ein im Innenraum angeordnetes Turbinengehäuse auf, wobei das Turbinengehäuse eine Mittelachse und mehrere beabstandet zur Mittelachse angeordnete Tragelemente aufweist, mit denen das Turbinengehäuse gegen ein in der Mittelachse wirkendes Drehmoment abgestützt ist. Jedem Tragelement ist ein Sensor zur Bestimmung einer am Tragelement wirkenden aktuellen Auflagekraft zugeordnet. Die Sensoren sind mit einer Auswerteeinheit verbunden. Die Auswerteeinheit ist ausgebildet, das erfindungsgemäße Verfahren auszuführen.

Damit ist eine Turbomaschine zur Ausführung des erfindungsgemäßen Verfahrens bereitgestellt, deren Leistung sich leicht bestimmen lässt.

In einer vorteilhaften Ausgestaltung der erfindungsgemäßen Turbomaschine ist der Sensor jeweils ein an einer Auflageposition des Tragelements angeordneter Kraftmess-Sensor.

Damit sind die Auflagekräfte direkt messbar. Eine Umrechnung aus anderen Größen braucht nicht zu erfolgen.

In einer alternativen Ausgestaltung der erfindungsgemäßen Turbomaschine ist der Sensor jeweils ein an dem Tragelement positionierter Dehnmessstreifen.

Die Dehnmessstreifen können leicht auch nachträglich angebracht werden und sind relativ preiswert. Die Turbomaschine ist damit auf einfache und kostengünstige Weise für das erfindungsgemäße Verfahren vorbereitet.

In einer weiteren vorteilhaften Ausgestaltung der erfindungsgemäßen Turbomaschine umfasst die Turbomaschine eine Evakuierungseinrichtung zum Erzeugen eines Unterdrucks im Innenraum und einen Einströmkompensator zum Abdichten des Innenraums zur Umgebung.

Derartige Einströmkompensatoren und Evakuierungsmaschinen sind bei verschiedenen Turbomaschinenkonfigurationen bereits für andere Zwecke vorgesehen. Evakuierungseinrichtungen sind insbesondere bei Dampfturbinen verbreitet. Die Turbomaschine braucht mithin nicht mit zusätzlichen Komponenten versehen werden, um eine Leistungsbestimmung gemäß dieser Erfindung durchführen zu können.

Ausführungsbeispiele der Erfindung werden anhand der Zeichnungen und der nachfolgenden Beschreibung näher erläutert. Es zeigen:
- Figur 1: einen Turbosatz mit erfindungsgemäßer Turbomaschine,
- Figur 2: ein Turbinengehäuse einer erfindungsgemäßen Turbomaschine,
- Figur 3: ein Tragelement des Turbinengehäuses der erfindungsgemäßen Turbomaschine und
- Figur 4: ein erfindungsgemäßes Leistungsbestimmungsverfahren.

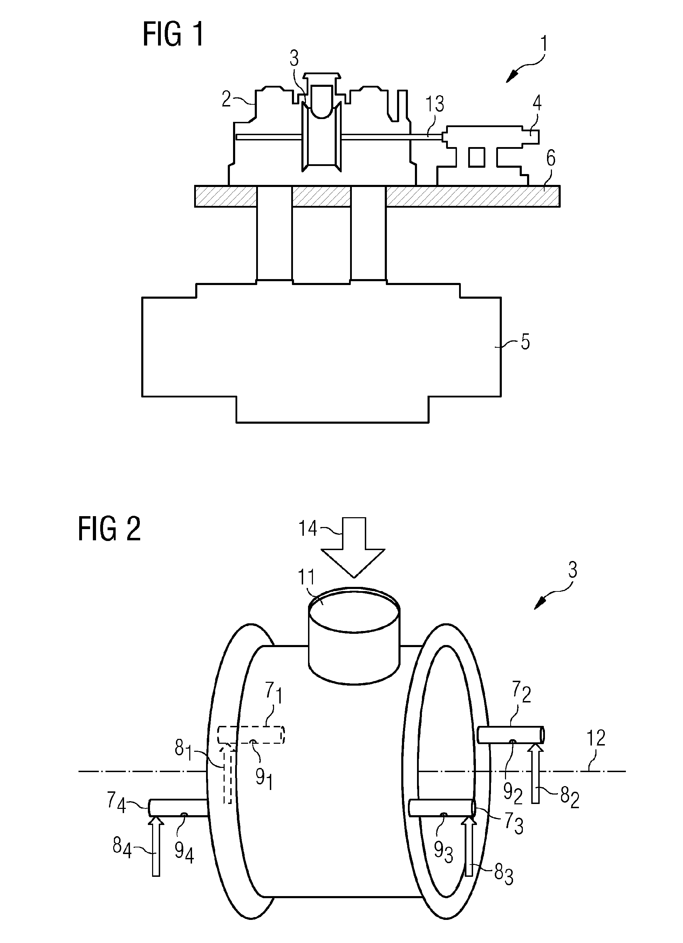

In der Figur 1 ist beispielhaft ein Turbosatz 1 skizziert. Der gezeigte Turbosatz 1 umfasst eine erfindungsgemäße Turbomaschine 2 und einen mit der Turbomaschine 2 mittels einer Welle 13 verbundenen Generator 4. Die Welle 13 ist in mehreren Lagern 16 gelagert. Die Turbomaschine 2 und der Generator 4 sind auf einem Fundament 6 angeordnet. Die Turbomaschine 2 ist insbesondere eine Dampfturbine 2, deren Abdampf von einem Kondensator 5 aufgenommen wird.

Die erfindungsgemäße Turbomaschine 2 weist einen Innenraum 18 auf. In dem Innenraum 18 ist ein Turbinengehäuse 3 angeordnet. Zudem weist die Turbomaschine 2 eine Eintrittsöffnung 15 auf, durch die im Betrieb der Turbomaschine 2 Dampf in das Turbinengehäuse 3 gelangen kann.

Das Turbinengehäuse 3 ist in der Figur 2 beispielhaft skizziert. Das Turbinengehäuse 3 ist um eine Mittelachse 12 herum angeordnet. Ist die Turbomaschine 2 wie in der beispielhaften Ausführung eine Dampfturbine 2, weist das Turbinengehäuse 3 im oberen Bereich ein Einströmrohr 17 auf. Ein Einströmkompensator 11 verbindet das Einströmrohr 17 des Turbinengehäuses 3 in der Weise mit der Eintrittsöffnung 15 der Turbomaschine 2, dass der Innenraum 18 der Turbomaschine 2 an dieser Stelle zur Umgebung hin abgedichtet ist. Gleichzeitig gewährleistet der Einströmkompensator 11 die Beweglichkeit des Turbinengehäuses 3 innerhalb der Turbomaschine 2. Der Einströmkompensator 11 ist ein flexibles Verbindungsstück zwischen Turbinengehäuse 3 und Turbomaschine 2.

Das Turbinengehäuse 3 beherbergt insbesondere Leitschaufeln und ist um einen hier nicht näher gezeigten mit Laufschaufeln bestückten Läufer herum angeordnet. Der Läufer dreht sich im Betrieb der Turbomaschine 2 auf der Mittelachse 12 und treibt die Welle 13 an, die ein Drehmoment 23 an den Generator 4 überträgt.

Das Turbinengehäuse 3 weist erfindungsgemäß mehrere Tragelemente 7 auf. Mit den Tragelementen 7 ist das Turbinengehäuse 3 gelagert. Die Tragelemente 7 sind beabstandet zur Mittelachse 12 angeordnet. Damit ist das Turbinengehäuse 3 auch gegen Drehmomente, die im Betrieb der Turbomaschine 2 in der Mittelachse wirken, abgestützt. In der Figur 2 sind beispielhaft vier Tragelemente 7₁, 7₂, 7₃, 7₄, gezeigt, die als Tragarme ausgeformt sind. Die Tragelemente 7 sind in der Figur 2 beispielhaft stirnseitig angeordnet. Die Tragelemente 7 können auch seitlich oder stirnseitig und seitlich positioniert sein. Die Lagerung der Tragelemente 7 findet an hier nicht näher gezeigten Auflagern statt, welche entsprechend ausgeformt und dimensioniert sind.

Erfindungsgemäß weist jedes der Tragelemente 7₁, 7₂, 7₃, 7₄, einen Sensor 9₁, 9₂, 9₃, 9₄ auf. Mittels der Sensoren 9₁, 9₂, 9₃, 9₄ sind an allen Tragelementen 7₁, 7₂, 7₃, 7₄, aktuelle Auflagekräfte 8₁, 8₂, 8₃, 8₄, bestimmbar, die zu diesem Zeitpunkt auf die Tragelemente 7₁, 7₂, 7₃, 7₄ wirkten. An jedem Tragelement 7 wirkt jeweils eine aktuelle Auflagekraft 8. Die Sensoren 9 sind mit einer nichtgezeigten Auswerteeinheit verbunden.

Die aktuellen Auflagekräfte 8 erhöhen sich, wenn mittels einer hier nicht näher dargestellten Evakuierungseinheit ein gegenüber der Umgebung niedrigerer Druck in dem Turbinengehäuse 3 erzeugt wird. Auf der Fläche, die dem Querschnitt des Einströmkompensators 11 entspricht, wirkt dann zusätzlich zur Gewichtskraft des Turbinengehäuses 3 ein Umgebungsdruck 14 als Überdruck. Dieser Umstand wird sich im erfindungsgemäßen Verfahren 20 zu Eigen gemacht.

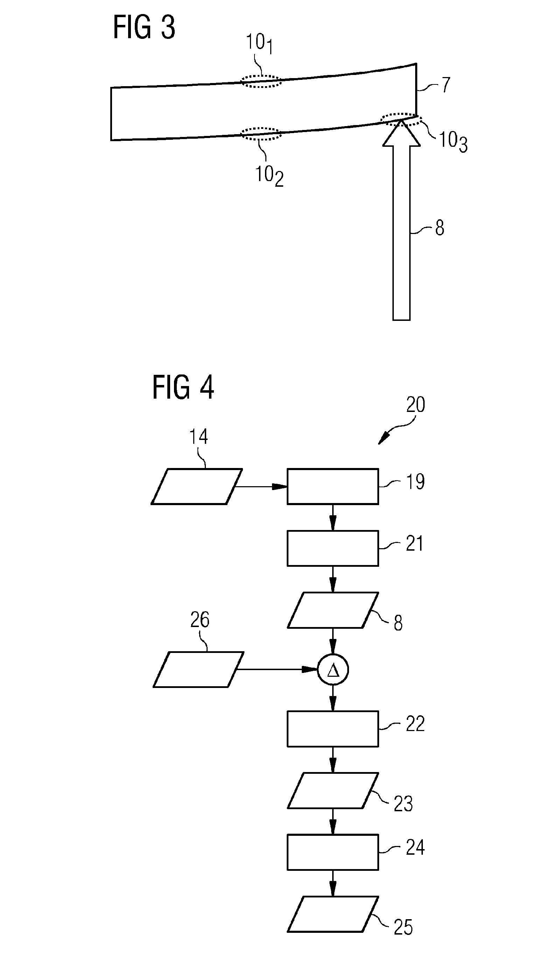

In der Figur 3 ist beispielhaft eines der Tragelemente 7 unter dem Einfluss der aktuellen Auflagekraft 8 skizziert. Das Tragelement 7 ist dabei elastisch verformt. Die dargestellte Verformung ist stark vergrößert dargestellt.

In der Figur 3 sind beispielhaft mögliche Sensorpositionen 10 gezeigt. Die Sensoren 9 können in einer ersten erfindungsgemäßen Variante der Turbomaschine 2 direkt die aktuelle Auflagekraft 8 am jeweiligen Tragelement 7 bestimmen. Dazu ist der Sensor 9 jeweils direkt an einer Auflageposition 10₃ des Tragelements 7 angeordnet. Der Sensor 9 ist dabei beispielsweise ein Piezoelement, eine Kraftmessdose oder auch ein Dünnfilmsensor. Zudem kann in einer zweiten Variante der erfindungsgemäßen Turbomaschine 2 die aktuelle Auflagekraft 8 auch über eine Ermittlung der Verformung des Tragelements 7 erfolgen. Dazu ist der Sensor 9 am Tragelement 7 dann jeweils an einer Dehnungsposition 10₂ oder auch an einer Stauchungsposition 10₁ angeordnet. Der Sensor 9 ist dabei insbesondere ein Dehnmessstreifen. Die beiden Varianten können auch gleichzeitig zum Einsatz kommen.

Die je Tragelement 7 aktuelle Auflagekraft 8 weist im Betrieb der Turbomaschine 2 einen anderen Wert auf als eine je Tragelement 7 permanente Auflagekraft 26 im Ruhezustand der Turbomaschine 2. Aus dieser Differenz zwischen der aktuellen Auflagekraft 8 und der permanenten Auflagekraft 26 an den einzelnen Tragelementen 7 wird im erfindungsgemäßen Verfahren 20 die aktuelle Leistung der Turbomaschine 2 bestimmt. Das erfindungsgemäße Leistungsbestimmungsverfahren 20 ist in der Figur 4 beispielhaft in einem Diagramm dargestellt.

In dem erfindungsgemäßen Verfahren 20 wird zunächst in einer Auflagekräfteermittlung 21 die an jedem Tragelement 7 wirkende aktuelle Auflagekraft 8 ermittelt. Die Ermittlung der aktuellen Auflagekraft 8 kann dabei durch eine direkte Messung der aktuellen Auflagekraft 8 mittels eines in der Auflageposition 10₃ angeordneten Kraftmess-Sensors 9 oder durch eine indirekte Bestimmung mittels eines Verformungs-Sensors 9, der in der Stauchungsposition 10₁ und/oder der Dehnungsposition 10₂ angeordnet ist, erfolgen.

In einer Drehmomentermittlung 22 wird dann das Drehmoment 23 der Welle 13 ermittelt. Dazu wird zunächst für jedes Tragelement 7 eine Differenz aus der aktuellen Auflagekraft 8 und der permanenten Auflagekraft 26 gebildet. Als Zwischenwert ergibt sich jeweils eine Differenzauflagekraft pro Tragelement 7. Diese Differenzauflagekraft ergibt mit dem zur Mittelachse 12 bekannten Abstand jeweils ein Einzeldrehmoment. Die Summe der Einzelelemente ergibt das Drehmoment 23 der Welle 13, da der Betrag des Drehmoments 23 der Welle gleich dem Betrag eines Drehmoments der Leitschaufeln ist und der Betrag des Drehmoments der Leitschaufeln gleich dem Betrag eines Drehmoments des Turbinengehäuses 3 ist.

In einer Leistungsermittlung 24 wird dann die Leistung 25 der Turbomaschine 2 ermittelt. Die Leistung der Turbomaschine 2 entspricht einer Leistung der Welle 13. Die Leistung der Welle 13 bestimmt sich aus einem Produkt des Drehmoments 23 der Welle 13 und der aktuellen Winkelgeschwindigkeit der Welle.

Insbesondere wenn die Auflagekräfteermittlung 21 mittels Überwachung der Verformung der Tragelemente 7 erfolgt, ist es erfindungsgemäß möglich, vor der Auflagekräfteermittlung 21 ein Verhältnis zwischen der Verformung der Tragelemente 7 und einer zusätzlich aufgebrachten Kraft zu bestimmen, um eine Kalibrierung 19 der Sensoren 9 durchzuführen. Dazu wird insbesondere das Anlegen eines Unterdrucks im Turbinengehäuse 3 genutzt. Durch das Absenken des Drucks im Turbinengehäuse 3 wirkt auf das Turbinengehäuse 3 der Umgebungsdruck 14 als Überdruck. Der Umgebungsdruck wirkt dabei auf der Fläche des Querschnitts des Einströmkompensators 11. Da der herbeigeführte Druckunterschied zwischen Turbinengehäusedruck und Umgebungsdruck 14 sowie die Querschnittfläche des Einströmkompensators 11 bekannt sind, ist auch die Kraft bekannt, die zusätzlich auf das Turbinengehäuse wirkt. Die zusätzliche Kraft und die elastische Verformung der Tragelemente 7 verhalten sich linear zueinander. Diese Möglichkeit für die Kalibrierung 19 ist bauartbedingt insbesondere bei Dampfturbinen 2 gegeben, denen für ihren eigentlichen Betrieb Evakuierungseinrichtungen schon zugeordnet sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren (20) zur Bestimmung einer Leistung (25) einer Turbomaschine (2), die in ihrem Innenraum (18) ein gegen ein Drehmoment (23) abgestütztes Turbinengehäuse (3) aufweist, bei dem aktuelle Auflagekräfte (8) des Turbinengehäuses (3) ermittelt (21), Differenzen zu hinterlegten permanenten Auflagekräften (26) gebildet werden und als Summe dieser Differenzen das Drehmoment (23) ermittelt (22) und daraus die Leistung (25) der Turbomaschine (2) ermittelt (24) wird.

2. Verfahren nach Anspruch 1,
bei dem eine elastische Verformung von Tragelementen (7) des Turbinengehäuses (3) ermittelt und aus der Verformung der Tragelemente (7) jeweils die aktuellen Auflagekräfte (8) bestimmt werden.

3. Verfahren nach Anspruch 2,
bei dem ein Verhältnis zwischen der Verformung der Tragelemente (7) und der aktuellen Auflagekräfte (8) durch Aufbringung einer vordefinierten Kraft ermittelt wird.

4. Verfahren nach Anspruch 3,
bei dem die vordefinierte Kraft durch ein Aufbringen eines bekannten Unterdrucks im Innenraum (18) der Turbomaschine (2) in Kombination mit einer Abdichtung des Innenraums (18) zur Umgebung erzeugt wird.

5. Turbomaschine (2) mit einem in einem Innenraum (18) der Turbomaschine (2) angeordneten Turbinengehäuse (3),
wobei das Turbinengehäuse (3) eine Mittelachse (12) und mehrere beabstandet zur Mittelachse (12) angeordnete Tragelemente (7) aufweist, mit denen das Turbinengehäuse (2) gegen ein in der Mittelachse (12) wirkendes Drehmoment abgestützt ist,
wobei jedem Tragelement (7) ein Sensor (9) zur Bestimmung einer am Tragelement (7) wirkenden aktuellen Auflagekraft (8) zugeordnet ist und die Sensoren (8) mit einer Auswerteeinheit verbunden sind, welche ausgebildet ist, das Verfahren (20) nach einem der vorherigen Ansprüche auszuführen.

6. Turbomaschine (2) nach Anspruch 5,
wobei der Sensor (9) jeweils ein an einer Auflageposition (10₃) des Tragelements (7) angeordneter Kraftmess-Sensor (9) ist.

7. Turbomaschine (2) nach Anspruch 5,
wobei der Sensor (9) jeweils ein an dem Tragelement (7) positionierter Dehnmessstreifen ist.

8. Turbomaschine (2) nach einem der Ansprüche 5 bis 7,
wobei die Turbomaschine (2) eine Evakuierungseinrichtung zum Erzeugen eines Unterdrucks im Innenraum (18) und einen Einströmkompensator (11) zum Abdichten des Innenraums (18) zur Umgebung umfasst.

9. Turbomaschine (2) nach einem der Ansprüche 5 bis 8,
wobei die Turbomaschine eine Dampfturbine (2) ist.
